# EUROPÄISCHE PATENTSCHRIFT

(11) **EP 1 231 406 B1**
(45) Veröffentlichungstag und Bekanntmachung des Hinweises auf die Patenterteilung: **09.02.2005**
(21) Anmeldenummer: 01129359.4
(22) Anmeldetag: 17.12.2001
(51) Int. Cl.: F16F 15/139, F16F 15/134

(54) **Schwingungsdämpfungseinrichtung**
Vibration damping arrangement
Dispositif d'amortissement de vibration

(30) Priorität: 08.02.2001 DE 10105688
(43) Veröffentlichungstag der Anmeldung: 14.08.2002
(73) Patentinhaber: ZF Sachs AG, 97424 Schweinfurt (DE)
(72) Erfinder: Schierling, Bernhard, Dipl.-Ing.(FH), 97273 Kürnach (DE)

(56) Entgegenhaltungen:
- DE-A- 4 128 868
- DE-A- 19 924 213
- US-A- 5 092 820
- US-A- 5 105 680
- "MECHANISCHER TORSIONSDAEMPFER IN FAHRZEUGEN" GUMMI, FASERN, KUNSTSTOFFE. INTERNATIONALE FACHZEITSCHRIFT FUR DIE POLYMER-VERARBEITUNG, GENTNER VERLAG. STUTTGART, DE, Bd. 52, Nr. 11, November 1999 (1999-11), Seiten 803-804, XP000868633 ISSN: 0176-1625

## Beschreibung

Die vorliegende Erfindung betrifft eine Schwingungsdämpfungseinrichtung, umfassend eine Primärseite, eine bezüglich der Primärseite gegen die Wirkung wenigstens einer Dämpferelementenanordnung um eine Drehachse drehbare Sekundärseite, wobei die wenigstens eine Dämpferelementenanordnung in oder nahe ihren Umfangsenden zur Kraftübertragung durch die Primärseite bzw. die Sekundärseite beaufschlagbar ist, sowie an der Primärseite oder/und der Sekundärseite einen Abstützbereich zur Abstützung der wenigstens einen Dämpferelementenanordnung nach radial außen, wobei Reibung zwischen der wenigstens einen Dämpferelementenanordnung und dem Abstützbereich zumindest in einem einer Umfangsmitte näheren Bereich der Dämpferelementenanordnung wirksam ist.

Eine solche Schwingungsdämpfungseinrichtung ist aus der US 5 092 820 A bekannt. Eine Dämpferelementenanordnung weist Dämpferfedern auf, die sich in Umfangsrichtung erstrecken und sich jeweils an beiden Umfangsenden an sogenannten Federtellern abstützen, die, ebenso wie die Dämpferfedern, in Fenstern aufgenommen sind und eine Wirkverbindung zu Primär- und Sekundärseite herstellen. An einer Federwindung zwischen den beiden Federtellern in einem einer Umfangsmitte näheren Bereich der Dämpferelementenanordnung, ist sogenannter Gleitschuh aufgenommen, der radial elastisch gegen den radial äußeren Abstützbereich gepresst wird. Die Federteller gelangen dagegen aufgrund einer Führung in den Fenstern nicht in Kontakt mit dem Abstützbereich.

Treten im Betrieb Drehmomentenschwankungen auf, welche durch die gegen die Wirkung der Dämpfungselementenanordnungen erfolgende Relativverdrehung zwischen der Primärseite und der Sekundärseite gemindert werden sollen, so werden die jeweiligen Dämpferelementenanordnungen zwischen ihren Umfangsenden komprimiert. Bei dieser Kompression bewegt sich der jeweilige Gleitschuh entlang dem zugeordneten Abstützbereich.

Abweichend hiervon ist aus der DE 41 28 868 A1 eine Schwingungsdämpfungseinrichtung bekannt, bei welcher die Dämpferelementenanordnungen jeweils eine Mehrzahl von in Umfangsrichtung aufeinander folgend angeordneten Dämpferfedern aufweisen, von denen sich die in den Umfangsenden der jeweiligen Dämpferelementenanordnung gelegenen Dämpferfedern über Federteller nicht nur in Umfangsrichtung an der Primärseite bzw. der Sekundärseite abstützen, sondern auch in Radialrichtung an einem radial außerhalb der Dämpferelementenanordnungen vorgesehenen Abstützbereich. An ihren einander jeweils zugewandten Enden stützen sich die einzelnen Dämpferfedern über Gleitschuhe aneinander und ebenso an dem Abstützbereich ab. Treten im Drehbetrieb Drehmomentenschwankungen auf, so werden die Dämpferelementenanordnungen zwischen der Primärseite und der Sekundärseite komprimiert. Bei dieser Kompression bewegen sich die verschiedenen Gleitorgane, d.h. die Federteller und die Gleitschuhe, mit ihren jeweiligen Gleitflächenbereichen entlang des zugeordneten Abstützbereichs. Es ist bekannt, zum Einstellen möglichst günstiger Gleitbedingungen diese Gleitorgane aus faserverstärkten Kunststoffen aufzubauen. Beispielsweise kommen glasfaserverstärkte oder kohlefaserverstärkte Kunststoffe in Frage, wobei diese Glasfasern bzw. Kohlefasern in ein thermoplastisches Grundmaterial, wie z.B. Polyamid, eingebettet sind. Auch ist es bekannt, diesem Material einen Festschmierstoff, beispielsweise Teflon (Polytetraflourethylen, PTFE) beizumischen.

Auch bei dieser Schwingungsdämpfungseinrichtung sind wieder die bereits erwähnten zwei Betriebszustände hinsichtlich des dynamischen Reibverhaltens der jeweiligen Dämpferelementenanordnungen bzw. der Gleitorgane derselben, kritisch. Treten nur geringe Drehmomentenschwankungen auf, so hat eine zu hohe Reibung zwischen den Gleitorganen und dem Abstützbereich zur Folge, dass über die vorhandene Haftreibung die Dämpferelementenanordnungen überbrückt werden. Treten relativ starke Drehmomentenschwankungen auf, wie dies beispielsweise bei Lastwechselstößen der Fall ist, wäre eine vergleichsweise hohe Reibung zwischen den verschiedenen Gleitorganen und dem Abstützbereich vorteilhaft, da durch die dabei zu erbringende Reibarbeit Schwingungsenergie in Wärmeenergie dissipiert wird. Während also die Bereitstellung von nur schwach reibenden Materialien, d.h. von Materialien, die einen geringen Reibkoeffizienten zur Folge haben, für den Zustand geringer Schwingungsanregungen gut ist, müssen für relativ starke Drehmomentenschwankungen Nachteile in Kauf genommen werden, da dann im Wesentlichen keine Reibenergie dissipiert wird. Umgekehrt wären stark reibende Materialien an den Gleitorganen, also Materialien, die einen großen Reibkoeffizienten aufweisen, für den Zustand geringer Drehmomentenschwankungen nachteilhaft, da letztendlich durch eine derartige Schwingungsdämpfungseinrichtung bzw. der Dämpferelementenanordnungen derselben der Schwingungsanregung überhaupt nicht entgegengewirkt werden könnte.

Es ist die Aufgabe der vorliegenden Erfindung, eine gattungsgemäße Schwingungsdämpfungseinrichtung derart weiterzubilden, dass sie in verschiedenen kritischen Schwingungsanregungszuständen verbessert zum Schwingungsabbau beitragen kann.

Erfindungsgemäß wird diese Aufgabe gelöst durch die Merkmale von Anspruch 1.

Die vorliegende Erfindung macht Gebrauch von dem Prinzip, dass zur Schwingungsdämpfung die wenigstens eine Dämpferelementenanordnung von der Primärseite bzw. der Sekundärseite an ihren Umfangsenden beaufschlagt wird. Da in den den Umfangsenden bzw. wenigstens einem Umfangsende näheren Bereichen eine geringe Reibwirkung vorhanden ist, können diese Bereiche auch bei vergleichsweise schwachen Schwingungsanregungen zur Schwingungsdämpfung beitragen, ohne dass die Gefahr der vorangehend angesprochenen reibmäßigen Überbrückung einer Dämpferelementenanordnung besteht. Bei vergleichsweise starken Schwingungsanregungen ist dann durch die in oder nahe der Umfangsmitte vorhandene stärkere Reibwirkung unter Beibehaltung der Dämpfungseigenschaft der Dämpferelementenanordnung an sich für eine verstärkte Reibwirkung gesorgt. Insbesondere bei stärkeren Schwingungsanregungen, wie z. B. bei Lastwechselschwingungen, kann somit vermehrt Schwingungsenergie über Reibarbeit in Wärmeenergie dissipiert werden.

Um bei der erfindungsgemäßen Schwingungsdämpfungseinrichtung die Dämpferelementenanordnung in ihrem dem wenigstens einen Umfangsende näheren Bereich bezüglich des Abstützbereichs mit einem kleineren Reibkoeffizienten zu versehen als in ihrem der Umfangsmitte näheren Bereich, kann die wenigstens eine Dämpferelementenanordnung wenigstens ein Dämpferelement aufweisen, das in seinem dem Umfangsende näheren Bereich mit einem Material ausgebildet, vorzugsweise beschichtet ist, das bezüglich des Abstützbereichs einen kleineren Reibkoeffizienten aufweist als ein Material, mit welchem das wenigstens eine Dämpferelement in seinem der Umfangsmitte näheren Bereich ausgebildet, vorzugsweise beschichtet ist. Durch den über die Umfangserstreckung der Dämpferelementenanordnung hinweg sich ändernden Reibkoeffizienten des zumindest in den Oberflächenbereichen vorgesehenen Materials derselben bezüglich des Materials des Abstützbereichs kann nahezu ein kontinuierlicher Übergang von einem umfangsendnahen Bereich mit nur sehr geringer Reibwirkung zu einem umfangsmittennahen Bereich mit vergleichsweise großer Reibwirkung erhalten werden.

Bei einer alternativen Ausgestaltungsform kann vorgesehen sein, dass die wenigstens eine Dämpferelementenanordnung eine Mehrzahl von in Umfangsrichtung aufeinander folgend angeordneten Dämpferelementen umfasst, dass die Dämpferelemente in ihren Endbereichen über Gleitorgane an dem Abstützbereich abgestützt oder abstützbar sind, und dass ein dem wenigstens einen Umfangsende der wenigstens einen Dämpferelementenanordnung näher liegendes Gleitorgan bezüglich des Abstützbereichs einen geringeren Reibkoeffizienten aufweist als ein der Umfangsmitte der wenigstens einen Dämpferelementenanordnung näher liegendes Gleitorgan. Dies kann beispielsweise dadurch realisiert werden, dass ein dem wenigstens einen Umfangsende der wenigstens einen Dämpferelementenanordnung näher liegendes Gleitorgan wenigstens in seinem Gleitflächenbereich ein mit Kohlefaser oder mit Aramidfaser verstärktes Kunststoffmaterial aufweist und dass ein der Umfangsmitte der wenigstens einen Dämpferelementenanordnung näher liegendes Gleitorgan wenigstens in seinem Gleitflächenbereich ein mit Glasfaser verstärktes Kunststoffmaterial aufweist. Dieser Aspekt der vorliegenden Erfindung macht Nutzen von der Erkenntnis, dass mit Kohlefasern oder Aramidfasern verstärkter Kunststoff bezüglich des in seiner Reiboberfläche im Allgemeinen aus Metall aufgebauten Abstützbereichs einen geringeren Haft- bzw. Gleitreibungskoeffizienten aufweist, als dies bei mit Glasfasern verstärktem Kunststoffmaterial der Fall ist. Durch die geeignete Auswahl verschiedener Materialien, die bezüglich des Abstützbereichs dann verschiedene Reibkoeffizienten aufweisen, für verschiedene Umfangsbereiche der wenigstens einen Dämpferelementenanordnung kann auch ein an eine bestimmte geforderte Betriebscharakteristik optimiert angepasster Übergang von einer vergleichsweise geringen Reibwirkung zu einer deutlich größeren Reibwirkung in oder nahe dem Umfangsmittenbereich erhalten werden.

Ferner kann bei der vorliegenden Erfindung vorgesehen sein, dass ein dem wenigstens einen Umfangsende der wenigstens einen Dämpferelementenanordnung näher liegendes Gleitorgan wenigstens in seinem Gleitflächenbereich einen höheren Festschmierstoffanteil aufweist als ein der Umfangsmitte der wenigstens einen Dämpferelementenanordnung näher liegendes Gleitorgan oder/und dass in einem dem wenigstens einen Umfangsende der wenigstens einen Dämpferelementenanordnung näher liegenden Gleitorgan wenigstens in seinem Gleitflächenbereich ein Festschmierstoff mit bezüglich des Abstützbereichs geringerem Reibungskoeffizienten vorgesehen ist, als bei einem der Umfangsmitte der wenigstens einen Dämpferelementenanordnung näher liegenden Gleitorgan. Auch die definierte Beimengung von Festschmierstoffen kann zur Erlangung verschiedener Reibcharakteristiken beitragen. Beispielsweise kann der Festschmierstoff Polytetraflourethylen (Teflon) sein.

Alternativ oder Zusätzlich zu den vorangehend angesprochenen erfindungsgemäßen Ausgestaltungsvarianten kann vorgesehen sein, dass der Abstützbereich in seinem im Wesentlichen zur Reibwechselwirkung mit dem dem wenigstens einen Umfangsende näheren Bereich der wenigstens einen Dämpferelementenanordnung vorgesehenen Bereich bezüglich der wenigstens einen Dämpferelementenanordnung einen kleineren Reibkoeffizienten aufweist als in seinem im Wesentlichen zur Reibwechselwirkung mit dem der Umfangsmitte näheren Bereich der wenigstens einen Dämpferelementenanordnung vorgesehenen Bereich. Hier kann beispielsweise auch durch entsprechende Beschichtung des Abstützbereichs für eine über dessen Umfangserstreckung hinweg sich verändernde Reibcharakteristik desselben gesorgt werden. Infolgedessen werden auch die an diesem Abstützbereich abgestützten umfangsmittennahen Bereiche beispielsweise bezüglich dem Abstützbereich dann einen größeren Reibkoeffizienten aufweisen als die umfangsendnahe liegenden Bereiche.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Querschnittansicht einer Schwingungsdämpfungseinrichtung;
- Fig. 2: eine Längsschnittansicht der in Fig. 1 dargestellten Schwingungsdämpfungseinrichtung, geschnitten längs einer Linie II-II in Fig. 1;
- Fig. 3: zwei Dämpferelementenanordnungen der erfindungsgemäßen Schwingungsdämpfungseinrichtung.

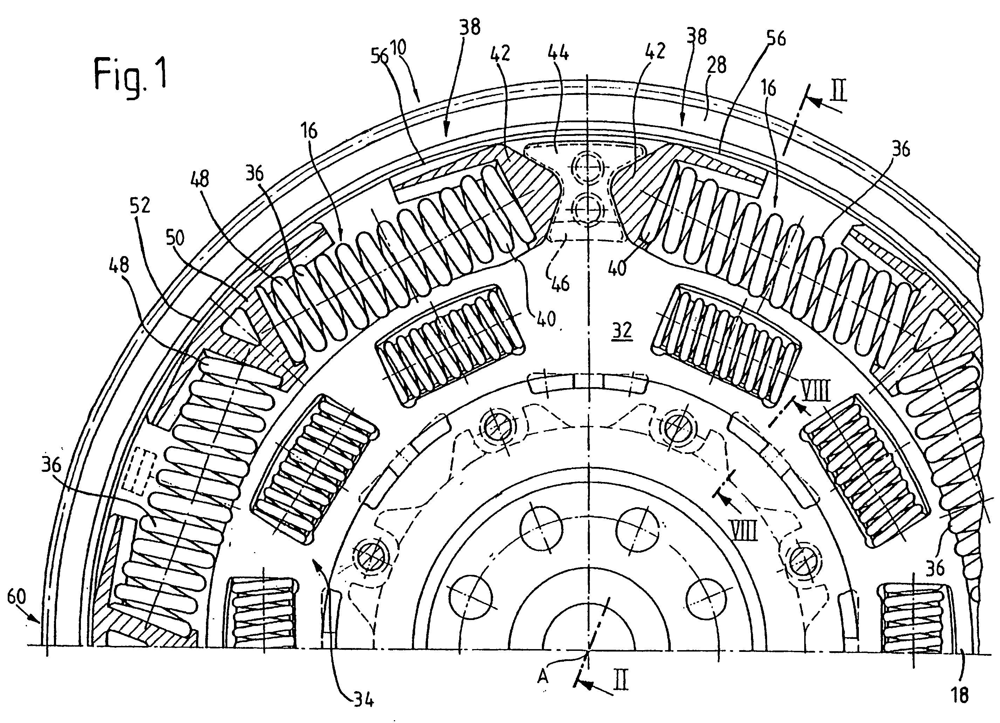

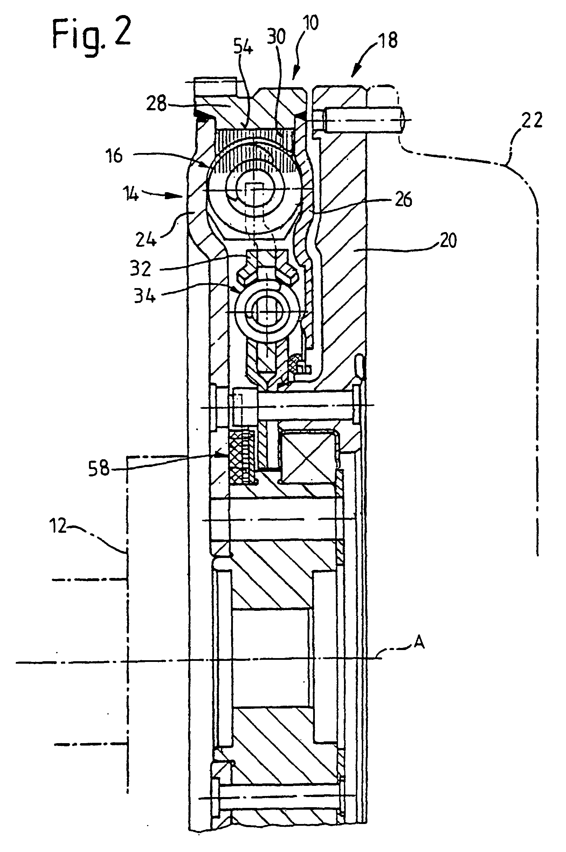

Die Fig. 1 und 2 zeigen den grundsätzlichen Aufbau einer erfindungsgemäßen Schwingungsdämpfungseinrichtung 10. Diese umfasst eine zur Ankopplung an eine Antriebswelle 12, beispielsweise Kurbelwelle einer Brennkraftmaschine, vorgesehene Primärseite 14. Ferner weist die Schwingungsdämpfungseinrichtung 10 eine gegen die Wirkung mehrerer Dämpferelementenanordnungen 16 bezüglich der Primärseite 14 um eine Drehachse A in begrenztem Drehwinkelbereich verdrehbare Sekundärseite 18 auf. Die Sekundärseite 18 weist ein scheibenartiges Schwungmasseteil 20 auf, mit welchem eine schematisch dargestellte Druckplattenbaugruppe 22 zum Bilden einer Reibungskupplung verbunden werden kann.

Die Primärseite 14 umfasst zwei Deckscheibenelemente 24, 26. Das Deckscheibenelement 24 ist in seinem radial inneren Bereich mit der Antriebswelle 12 koppelbar und ist über ein Verbindungselement 28 in seinem radial äußeren Bereich mit dem radial äußeren Bereich des Deckscheibenelements 26 fest gekoppelt. Zwischen den Deckscheibenelementen 24, 26 ist ein nach radial außen hin durch das Verbindungselement 28 begrenzter Raumbereich 30 gebildet, in welchem letztendlich die Dämpferelementenanordnung 1 6 bzw. die Dämpferelementenanordnungen 16 liegen.

Der Sekundärseite 18 ist eine scheibenartige Baugruppe 32 zugeordnet, die in ihrem radial äußeren Bereich mit den Dämpferelementenanordnungen 16 zusammenwirkt und in ihrem radial inneren Bereich mit dem Masseteil 20 verbunden ist. In diese Baugruppe ist eine allgemein mit 34 bezeichnete Leerlaufdämpferanordnung integriert.

Die bzw. jede der letztendlich die Lastdämpferstufe bildenden Dämpferelementeneinheiten 16 umfasst im dargestellten Ausgestaltungsbeispiel eine Mehrzahl von in Umfangsrichtung aufeinander folgend angeordneten als Schraubendruckfedern ausgebildete Dämpferfedern 36. Die an den Umfangsenden 38 der Dämpferelementenanordnungen 16 angeordneten Dämpferfedern 36 stützen sich mit ihren umfangsendnahen Enden 40 über sogenannte Federteller 42 zur Drehmoment- bzw. Kraftübertragung an der Primärseite 14 bzw. der Sekundärseite 18 ab. Sekundärseitig erfolgt diese Abstützung über nach radial außen ragende Armabschnitte 44 der scheibenartigen Baugruppe 32. Primärseitig erfolgt diese Abstützung beispielsweise über an den Deckscheibenelementen 24, 26 angebrachte Abstützelemente 46. Je nach Drehmomenteinleitungsrichtung wird einer der an den Umfangsenden 38 positionierten Federteller 42 einer jeweiligen Dämpferelementeneinheit 16 durch die Primärseite 14 beaufschlagt und der andere der beiden Federteller 42 einer jeweiligen Dämpferelementeneinheit wird dann durch die Sekundärseite 18 beaufschlagt.

In ihren einander zugewandt positionierten Enden 48 stützen sich die Dämpferfedern 36 einer jeden Dämpferelementeneinheit 16 über sogenannte Gleitschuhe 50 aneinander ab. Jeder dieser Gleitschuhe 50 weist einen nach radial außen gewandten Gleitflächenbereich 52 auf, welcher an einer nach radial innen gewandt positionierten Gleitoberfläche 54 des Verbindungselementes 28 anliegt. In entsprechender Weise weisen die Federteller 42 radial außen jeweilige Gleitflächenbereiche 56 auf, mit welchen sie ebenfalls an der Gleitoberfläche 54 abgestützt sind oder abgestützt werden können. Insbesondere im Drehbetrieb und der dabei fliehkraftbedingten Kraftbeaufschlagung der Dämpferfedern 36 bzw. der als Gleitorgane dienende Federteller 42 und Gleitschuhe 50 nach radial außen kommen die jeweiligen Gleitflächenbereiche 56, 52 dieser Gleitorgane 42, 50 in reibmäßige Anlage an der Gleitoberfläche 54 des Verbindungselementes 28 und verlagern sich dann bei durch Schwingungsanregung bedingter Relativverdrehung zwischen der Primärseite 14 und der Sekundärseite 18 in Umfangsrichtung entlang derselben. Zusätzlich zu einer durch eine zwischen der Primärseite 14 und der Sekundärseite 18 wirkenden Reibeinrichtung 58 erzeugten Reibkraft wird durch diese entlang der Gleitoberfläche 54 sich bewegenden Gleitorgane 42, 50 eine zusätzliche Reibwirkung erzeugt, die zur Schwingungsdämpfung beiträgt.

Die vorliegende Erfindung schlägt nun Maßnahmen vor, mit welchen durch definierte Einstellung der Reibverhältnisse zwischen den verschiedenen Gleitorganen 42, 50 einerseits und der Gleitoberfläche 54 andererseits die Schwingungsdämpfungscharakteristik einer erfindungsgemäßen Schwingungsdämpfungseinrichtung für eine Mehrzahl an Betriebszuständen optimiert ausgelegt werden kann.

Wie bereits eingangs erläutert, ist es zum einen erforderlich, dass die erfindungsgemäße Schwingungsdämpfungseinrichtung 10 dann schwingungsabbauend wirksam ist, wenn vergleichsweise schwache Schwingungsanregungen, die jedoch die Dämpfungskapazität der Leerlaufdämpferstufe 34 übersteigen, auftreten. Weiterhin soll jedoch auch dann ein gutes Schwingungsdämpfungsverhalten vorliegen, wenn beispielsweise durch Lastwechselschwingungen induzierte Relativverdrehungen zwischen der Primärseite 14 und der Sekundärseite 18 auftreten. Im ersteren Falle ist es erforderlich, dass zum Bereitstellen einer Schwingungsdämpfungsfunktion auch bei vergleichsweise schwachen Schwingungsanregungen die Dämpferelementenanordnungen 16 durch Kompression zumindest eines Teils ihrer Dämpferfedern 36 eine Relativverdrehung zwischen der Primärseite 14 und der Sekundärseite 18 zulassen. Das heißt, die dann reibend sich entlang der Gleitoberfläche 54 bewegenden Gleitorgane 42 oder 50 dürfen bezüglich dieser Gleitoberfläche 54 nur eine vergleichsweise geringe Reibwirkung erfahren. Zum Abbau größerer Schwingungsanregungen ist es jedoch vorteilhaft, eine vergleichsweise starke Reibwechselwirkung zwischen den Gleitorganen 42 bzw. 50 und der Gleitoberfläche 54 am Verbindungselement 28 bereitzustellen.

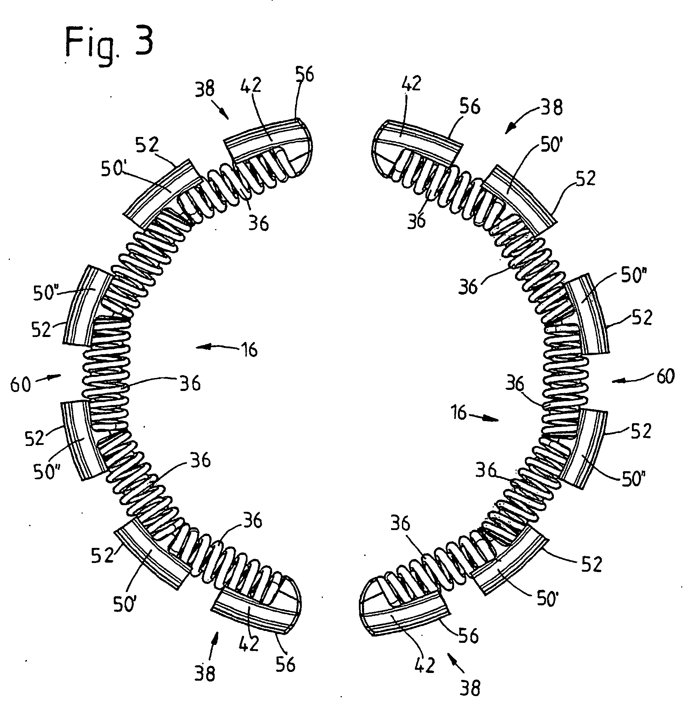

Gemäß den Prinzipien der vorliegenden Erfindung ist nun vorgesehen, dass die zwischen den Dämpferelementenanordnungen 16 und der als Abstützbereich wirksamen Gleitoberfläche 54 von den Umfangsenden 38 zu einem jeweiligen Umfangsmittenbereich 60 der Dämpferelementenanordnungen 16 hin die vorhandene Reibung zunimmt. Gemäß einem ersten in der linken Hälfte der Fig. 3 dargestellten Ausgestaltungsbeispiel der vorliegenden Erfindung kann dies dadurch erreicht werden, dass beispielsweise die beiden an den Umfangsenden 38 der Dämpferelementenanordnung 16 vorgesehenen Federteller 42 wenigstens im Bereich ihrer Gleitflächen 56, vorzugsweise vollständig, mit einem mit Kohlefasern oder Aramidfasern verstärkten Basiskunststoff, beispielsweise Polyamid, ausgebildet sind. Auch die in Umfangsrichtung dann unmittelbar folgenden Gleitschuhe 50' können zumindest im Bereich ihrer Gleitflächen 52 mit derartigem mit Kohlefasern oder Aramidfasern verstärktem Kunststoff ausgebildet sein. Die näher an der Umfangsmitte 60 positionierten Gleitschuhe 50" können dann wiederum wenigstens im Bereich ihrer Gleitflächen 52 aus mit Glasfasern verstärktem Baslskunststoff, beispielsweise wiederum Polyamid, ausgebildet sein. Das die Gleitoberfläche 54 bereitstellende Verbindungselement 28 ist im allgemeinen aus Metall aufgebaut und weist auch in dem die Gleitoberfläche 54 bereitstellenden Oberflächenbereich eine metallische Oberfläche auf. Bezüglich einer derartigen metallischen Oberfläche haben die mit Kohlefaser bzw. Aramidfaser verstärkten Gleitorgane einen geringeren Reibkoeffizienten als die mit Glasfaser verstärkten Reiborgane. Dies bedeutet letztendlich, dass von einem den Umfangsenden 38 nahen Bereich zu einem der Umfangsmitte 60 nahen oder näheren Bereich der Dämpferelementenanordnung 16 deren Reibkoeffizient bezüglich der am Verbindungselement 28 gebildeten Reiboberfläche 54 zunimmt. Bei Drehmomenteneinleitung können dann zunächst die in den umfangsendnahen Bereichen positionierten Dämpferfedern 36 vergleichsweise leicht komprimiert werden, da die beiden Federteller 42 und die noch umfangsendnäheren Gleitschuhe 50' eine vergleichsweise geringe Haft- und Gleitreibungswirkung bezüglich der Gleitoberfläche 54 erfahren werden. Es kann somit auch eine relativ schwache Schwingungsanregung durch Kompression der Dämpferelementeneinheiten 16 abgefangen werden. Bei stärkeren Schwingungsanregungen werden dann auch durch Kompression der umfangsmittennäheren Dämpferfedern 36 die Gleitschuhe 50" verlagert, wobei aufgrund des deutlich höheren Haft- bzw. auch Gleitreibungskoeffizienten bezüglich der Gleitoberfläche 54 hier ein deutlich größerer Anteil der eingeleiteten Schwingungsenergie in Reibarbeit umgesetzt und dann als Wärme dissipiert wird.

Bei der in der Fig. 3 rechts dargestellten Ausgestaltungsvariante einer Dämpferelementenanordnung 16 sind nur die an den Umfangsenden 38 positionierten Federteller 42 zumindest im Bereich ihrer Gleitflächen 56 mit kohlefaser- oder glasfaserverstärktem Kunststoff ausgebildet. Die verschiedenen Gleitschuhe 50' und 50", welche der Umfangsmitte 60 näher liegen, als die Federteller 42, sind dann beispielsweise aus glasfaserverstärktem Kunststoff ausgebildet und weisen somit bezüglich der Gleitoberfläche 54 einen höheren Reibkoeffizienten auf als die in den Umfangsenden 38 angeordneten Federteller 42. Auch hier wird dann Gebrauch gemacht von dem Prinzip, von einem umfangsendnäheren Bereich zu einem umfangsmittennäheren Bereich die Reibwechselwirkung, d.h. den Reibkoeffizient, bezüglich der zur Abstützung nach radial außen hin dienenden Gleitoberfläche 54 zunehmen zu lassen. Es können dann bei Drehmomenteneinleitung zunächst wieder die umfangsendnäheren Dämpferfedern 36 unter Begleitung einer vergleichsweise schwachen Reibungswirkung komprimiert werden. Bei Einleitung stärkerer Schwingungsanregungen werden auch wieder die umfangsmittennäheren Dämpferfedern 36 unter Begleitung einer vergleichsweise starken Reibwirkung komprimiert.

Um den Effekt der vorliegenden Erfindung, also die Abstufung des Haft- bzw. auch des Gleitreibungskoeffizienten vom umfangsendnahen Bereich zum umfangsmittennahen Bereich hin weiter zu verstärken, ist es beispielsweise möglich, vom umfangsendnahen Bereich zum umfangsmittennahen Bereich hin folgende Staffelung von Gleitorganen 42 bzw. 50 vorzusehen: das dem Umfangsende 38 am nächsten liegende Gleitorgan, also beispielsweise der Federteller 42, ist aus kohlefaser- oder aramidverstärktem Basiskunststoff, beispielsweise Polyamid, unter Beimengung eines Festschmierstoffs, beispielsweise Polytetraflourethylen (PTFE), ausgebildet. Das in Umfangsrichtung in Richtung zum Umfangsmittenbereich hin folgende Gleitorgan, also beispielsweise der nächste Federteller 50, ist aus kohlefaserverstärktem oder glasfaserverstärktem Kunststoff ohne Beimengung eines derartigen Festschmierstoffs ausgebildet. Das nächste dann zur Umfangsmitte hin folgende Gleitorgan ist dann aus glasfaserverstärktem Kunststoff mit Beimengung eines Festschmierstoffs, also beispielsweise wieder Plytetraflourethylen, ausgebildet, das nächste dann zur Umfangsmitte hin folgende Gleitorgan ist dann mit glasfaserverstärktem Kunststoff ohne der Beimengung eines zusätzlichen Festschmierstoffs, also beispielsweise Polytetraflourethylen, ausgebildet. Durch die sukzessive Staffelung verschiedener Faserbeimengungen und die Staffelung der Beimengung von zusätzlichen Festschmierstoffen kann also vom umfangsendnahen Bereich zum umfangsmittennahen Bereich ein vergleichsweise feingestufter Übergang von einem Bereich mit vergleichsweise geringem Reibkoeffizienten (im umfangsendnahen Bereich) zu einem Bereich mit vergleichsweise hohem Reibkoeffizienten bereitgestellt werden. Des Weiteren ist es möglich, die Staffelung im Reibkoeffizienten durch die Veränderung des Gehalts an Festschmierstoff vom umfangsendnahen Bereich zum umfangsmittennahen Bereich hin vorzusehen. So könnten beispielsweise im umfangsendnahen Bereich aus glasfaserverstärktem Kunststoff oder auch kohlefaserverstärktem Kunststoff aufgebaute Gleitorgane mit relativ großer Beimengung von Festschmierstoff vorgesehen sein, und zur Umfangsmitte hin kann der prozentuale Anteil des beigemengten Festschmierstoffs dann sukzessive abnehmen. Dabei können dann die im umfangsmittennäheren Bereich vorgesehenen Gleitorgane hinsichtlich des beigemengten Fasermaterials den in den umfangsendnäheren Gleitorganen entsprechen.

Selbstverständlich ist es möglich, bei der erfindungsgemäß ausgestalteten Schwingungsdämpfungseinrichtung bei der vorangehend angegebenen Staffelung verschiedener Beimengungen bzw. Grundkörpermaterialien Variationen vorzunehmen. So ist es beispielsweise beim Einsatz von insgesamt sechs Gleitorganen bei einer Dämpferelementeneinheit auch möglich, die beiden umfangsendnahen Gleitorgane, also die Federteller 42, aus kohlefaser- oder aramidfaserverstärktem Kunststoff mit Beimengung eines Festschmierstoffs aufzubauen, die dann zur Umfangsmitte hin folgenden Gleitorgane, also beispielsweise in der Fig. 3 die Gleitschuhe 50' mit kohlefaser- oder aramidfaserverstärktem Material ohne Festschmierstoff oder mit geringerer Festschmierstoffbeimengung auszubilden, und von den beiden der Umfangsmitte am nächsten gelegenen Gleitorganen, also den Gleitschuhen 50", eines aus glasfaserverstärktem Kunststoff ohne oder mit geringerer Festschmierstoffbeimengung und eines aus glasfaserverstärktem Kunststoff mit Festschmierstoffbeimengung oder mit höherer Festschmierstoffbeimengung aufzubauen.

Um die Abstufung der Reibcharakteristik von dem umfangsendnahen Bereich zu dem umfangsmittennahen Bereich zu erlangen, ist es grundsätzlich auch möglich, an der Gleitoberfläche 54 verschiedene Oberflächenbereiche bereitzustellen, beispielsweise durch lokales Beschichten derselben oder durch Beschichten verschiedener Bereiche mit verschiedenen Materialien, die dann bezüglich der reibend wirksam werdenden Organe der Dämpferelernentenanordnung 16 unterschiedliche Haft- bzw. Gleitreibungskoeffizienten zur Folge haben. In den im Wesentlichen dann mit den umfangsendnäheren Bereichen der Dämpferelementenanordnung 16 zusammenwirkenden Bereichen weist die Gleitoberfläche 54 einen geringeren Reibkoeffizienten auf, als in den im Wesentlichen mit den umfangsmittennäheren Bereichen der Dämpferelementenanordnung 16 zusammenwirkenden Oberflächenbereichen. Diese Anordnung ist vor allem dann vorteilhaft, wenn die Dämpferelementeneinheiten 16 nicht die in den Figuren dargestellten mehreren in Umfangsrichtung aufeinander folgenden Federn aufweisen, sondern wenn jede der Dämpferelementeneinheiten 16 eine in Umfangsrichtung zwischen den beiden Endbereichen 38 durchlaufende Feder aufweist. Diese liegt über ihren Umfangserstreckungsbereich dann nach radial außen hin an der Gleitoberfläche an und kann aufgrund der in Umfangsrichtung sich ändernden Reibcharakteristik der Gleitoberfläche 54 dann ebenfalls eine Gesamtreibcharakteristik vorsehen, bei welcher in den umfangsendnahen Bereichen eine geringe Reibwirkung vorhanden ist als in den umfangsmittennahen Bereichen.

Alternativ oder zusätzlich ist es möglich, bei einer Ausgestaltungsvariante, bei welcher der oder die Dämpferfedern unmittelbar an der Gleitoberfläche 54 zur Anlage kommen, die Dämpferfedern mit einem Material zu beschichten, das bezüglich der Gleitoberfläche 54 zur Einstellung eines definierten Reibverhaltens führt. In umfangsendnahen Bereichen ist dann eine Beschichtung vorgesehen, die bezüglich der Gleitoberfläche 54 einen vergleichsweise geringen Reibkoeffizienten zur Folge hat, während in einem umfangsmittennäheren Bereich dann eine Beschichtung vorgesehen wäre, die bezüglich der Gleitoberfläche 54 einen höheren Reibkoeffizienten zur Folge hat. Selbstverständlich ist es hier ebenso wie bei der vorangehend beschriebenen Ausgestaltungsform möglich, durch nur lokales Beschichten der Dämpferfeder oder Dämpferfedern eine lokale Erhöhung bzw. eine lokale Absenkung des Reibkoeffizienten zu erzielen.

Bei einer weiteren erfindungsgemäßen Ausgestaltungsform kann alternativ oder zusätzlich zu den vorangehend beschriebenen Maßnahmen insbesondere bei einer in Umfangsrichtung durchlaufenden Feder bzw. einer vergleichsweise langen Feder vorgesehen sein, dass diese in ihrem oder ihren umfangsendnahen Bereichen nicht zur Reibanlage an der Gleitoberfläche 54 kommen kann. Dies kann beispielsweise dadurch erfolgen, dass an der Primärseite 14 bzw. an der Sekundärseite 18 in den jeweiligen Abstützbereichen Organe vorhanden sind, die den Umfangsendbereich einer jeweiligen Feder in Abstand zur Gleitoberfläche 54 halten. Erst in einem umfangsmittennäheren Bereich legt sich eine derartige Feder kann allmählich an die Gleitoberfläche 54 an, so dass hier wieder von dem Prinzip Gebrauch gemacht wird, dass beim Übergang von einem umfangsendnäheren Bereich zu einem umfangsmittennäheren Bereich die Reibwirkung zwischen einer Dämpferelementenanordnung 16 und der Gleitfläche 54 verstärkt wird.

Das vorangehend detailliert beschriebene Prinzip der Zunahme der Reibstärke zwischen dem umfangsendnahen Bereich und dem umfangsmittennahen Bereich kommt besonders dann vorteilhaft zur Wirkung, wenn zusätzlich in den an den Umfangsenden vorgesehenen Gleitorganen, also den Federtellern 42, jeweils eine Verdrehwinkel freistellende Nut vorgesehen ist. Dies kann also eine Nut sein, in welcher der armartige Abschnitt 44 der Sekundärseite 18 in Anlage an dem jeweiligen Federteller 42 kommt, so dass grundsätzlich ein minimaler Freidrehwinkel zwischen der Primärseite 14 und der Sekundärseite 18 möglich ist. Bei Lastwechseln, also bei Umkehr der Drehmomenteinleitungsrichtung, besteht somit ein bestimmter, dem Freiwinkel entsprechender Leergang zwischen der Primärseite 14 und der Sekundärseite 18, so dass nach Durchlauf dieses Freiwinkels ein jeweiliger Armabschnitt 44 bereits mit einer vorbestimmten Relativgeschwindigkeit auf einen Federteller 42 auftrifft. Durch den dabei erzeugten Schlag wird der Federteller spontan in einen Gleitreibungszustand überführt, so dass insbesondere bei vergleichsweise schwachen Schwingungsanregungen das eingangs angesprochene Problem des Festhaftens der in den Umfangsenden gelegenen Gleitorgane weiter verringert werden kann.

## Patentansprüche

1. Schwingungsdämpfungsvorrichtung, umfassend:
- eine Primärseite (14),
- eine bezüglich der Primärseite (14) gegen die Wirkung wenigstens einer Dämpferelementenanordnung (16) um eine Drehachse (A) drehbare Sekundärseite (18), wobei die wenigstens eine Dämpferelementenanordnung (16) in oder nahe ihren Umfangsenden (38) zur Kraftübertragung durch die Primärseite (14) bzw. die Sekundärseite (18) beaufschlagbar ist,
- an der Primärseite (14) oder /und der Sekundärseite (18) einen Abstützbereich (54) zur Abstützung der wenigstens einen Dämpferelementenanordnung (16) nach radial außen,
- wobei Reibung zwischen der wenigstens einen Dämpferelementenanordnung (16) und dem Abstützbereich (54) in einem einer Umfangsmitte (60) näheren Bereich der Dämpferelementenanordnung (16 wirksam ist,
**dadurch gekennzeichnet,**
- **dass** Reibung auch zwischen der wenigstens einen Dämpferelementenanordnung (16) und dem Abstützbereich (54) in einem wenigstens einem Umfangsende (38) näheren Bereich der Dämpferelementenanordnung (16) wirksam ist, und
- die Dämpferelementenanordnung (16) in Ihrem dem wenigstens einen Umfangsende (38) näheren Bereich bezüglich des Abstützbereichs (54) einen kleineren Reibkoeffizienten aufweist als in ihrem der Umfangsmitte (60) näheren Bereich.

2. Schwingungsdämpfungseinrichtung nach Anspruch 1,
**dadurch gekennzeichnet,**
**dass** die wenigstens eine Dämpferelementenanordnung (16) wenigstens ein Dämpferelement aufweist, das in seinem dem Umfangsende (38) näheren Bereich mit einem Material ausgebildet, vorzugsweise beschichtet ist, das bezüglich des Abstützbereichs (54) einen kleineren Reibkoeffizienten aufweist, als ein Material, mit welchem das wenigstens eine Dämpferelement in seinem der Umfangsmitte (60) näheren Bereich ausgebildet, vorzugsweise beschichtet ist.

3. Schwingungsdämpfungseinrichtung nach Anspruch 1,
**dadurch gekennzeichnet,**
**dass** die wenigstens eine Dämpferelementenanordnung (16) eine Mehrzahl von in Umfangsrichtung aufeinander folgend angeordneten Dämpferelementen (36) umfasst, dass die Dämpferelemente (36) in ihren Endbereichen (48) über Gleitorgane (42, 50) an dem Abstützbereich (54) abgestützt oder abstützbar sind, und dass ein dem wenigstens einen Umfangsende (38) der wenigstens einen Dämpferelementenanordnung (16) näher liegendes Gleitorgan (42; 50') bezüglich des Abstützbereichs (54) einen geringeren Reibkoeffizienten aufweist, als ein der Umfangsmitte der wenigstens einen Dämpferelementenanordnung (16) näher liegendes Gleitorgan (50; 50").

4. Schwingungsdämpfungseinrichtung nach Anspruch 3,
**dadurch gekennzeichnet,**
**dass** ein dem wenigstens einen Umfangsende (38) der wenigstens einen Dämpferelementenanordnung (16) näher liegendes Gleitorgan (42) wenigstens in seinem Gleitflächenbereich (56) ein mit Kohlefaser oder mit Aramidfaser verstärktes Kunststoffmaterial aufweist und dass ein der Umfangsmitte (60) der wenigstens einen Dämpferelementenanordnung näher liegendes Gleitorgan (50) wenigstens in seinem Gleitflächenbereich (52) ein mit Glasfaser verstärktes Kunststoffmaterial aufweist.

5. Schwingungsdämpfungseinrichtung nach Anspruch 3 oder 4,
**dadurch gekennzeichnet,**
**dass** ein dem wenigstens einen Umfangsende (38) der wenigstens einen Dämpferelementenanordnung (16) näher liegendes Gleitorgan (42) wenigstens in seinem Gleitflächenbereich (56) einen höheren Festschmierstoffanteil aufweist, als ein der Umfangsmitte (60) der wenigstens einen Dämpferelementenanordnung (16) näher liegendes Gleitorgan (50) oder/und dass in einem dem wenigstens einen Umfangsende (38) der wenigstens einen Dämpferelementenanordnung (16) näher liegenden Gleitorgan (42) wenigstens in seinem Gleitflächenbereich (56) ein Festschmierstoff mit bezüglich des Abstützbereichs (54) geringerem Reibungskoeffizienten vorgesehen ist, als bei einem der Umfangsmitte (60) der wenigstens einen Dämpferelementenanordnung (16) näher liegenden Gleitorgan (50).

6. Schwingungsdämpfungseinrichtung nach Anspruch 5,
**dadurch gekennzeichnet,**
**dass** der Festschmierstoff Polytetraflourethylen ist.

7. Schwingungsdämpfungseinrichtung nach einem der Ansprüche 1 bis 6,
**dadurch gekennzeichnet,**
**dass** der Abstützbereich (54) in seinem im Wesentlichen zur Reibwechselwirkung mit dem im wenigstens einen Umfangsende (38) näheren Bereich der wenigstens einen Dämpferelementenanordnung (16) vorgesehenen Bereich bezüglich der wenigstens einen Dämpferelementenanordnung (16) einen kleineren Reibkoeffizienten aufweist, als in seinem im Wesentlichen zur Reibwechselwirkung mit dem der Umfangsmitte (60) näheren Bereich der wenigstens einen Dämpferelementenanordnung (16) vorgesehenen Bereich.

## Claims

1. Vibration-damping apparatus, comprising:
- a primary side (14),
- a secondary side (18) which can be rotated about a rotational axis (A) with respect to the primary side (14) counter to the action of at least one damper-element arrangement (16), it being possible for the at least one damper-element arrangement (16) to be acted on at or near its circumferential ends (38) by the primary side (14) or the secondary side (18) in order to transmit force,
- a supporting region (54) on the primary side (14) and/or the secondary side (18) for supporting the at least one damper-element arrangement (16) in a radially outward manner,
- friction between the at least one damper-element arrangement (16) and the supporting region (54) occurring in a region of the damper-element arrangement (16) which is closer to the centre of the circumference (60),
**characterized**
- **in that** friction also occurs between the at least one damper-element arrangement (16) and the supporting region (54) in a region of the damper-element arrangement (16) which is closer to at least one circumferential end (38), and
- with regard to the supporting region (54), the damper-element arrangement (16) has a lower coefficient of friction in its region which is closer to the at least one circumferential end (38) than in its region which is closer to the centre of the circumference (60).

2. Vibration-damping device according to Claim 1, **characterized in that** the at least one damper-element arrangement (16) has at least one damper element which, in its region which is closer to the circumferential end (38), is configured from, preferably coated with, a material which has a lower coefficient of friction with regard to the supporting region (54) than a material from which the at least one damper element is configured, with which it is preferably coated, in its region which is closer to the centre of the circumference (60).

3. Vibration-damping device according to Claim 1, **characterized in that** the at least one damper-element arrangement (16) comprises a multiplicity of damper elements (36) which are arranged so as to follow one another in the circumferential direction, **in that** the damper elements (36) are supported or can be supported in their end regions (48) on the supporting region (54) via sliding members (42, 50), and **in that** a sliding member (42; 50') which lies closer to the at least one circumferential end (38) of the at least one damper-element arrangement (16) has a lower coefficient of friction with regard to the supporting region (54) than a sliding member (50; 50'') which lies closer to the centre of the circumference of the at least one damper-element arrangement (16).

4. Vibration-damping device according to Claim 3, **characterized in that** a sliding member (42) which lies closer to the at least one circumferential end (38) of the at least one damper-element arrangement (16) has, at least in its sliding-surface region (56), a plastics material which is reinforced with carbon fibre or with aramid fibre, and **in that** a sliding member (50) which lies closer to the centre of the circumference (60) of the at least one damper-element arrangement has, at least in its sliding-surface region (52), a plastics material which is reinforced with glass fibre.

5. Vibration-damping device according to Claim 3 or 4, **characterized in that** a sliding member (42) which lies closer to the at least one circumferential end (38) of the at least one damper-element arrangement (16) has, at least in its sliding-surface region (56), a higher solid lubricant fraction than a sliding member (50) which lies closer to the centre of the circumference (60) of the at least one damper-element arrangement (16), or/and **in that** a solid lubricant with a lower coefficient of friction with regard to the supporting region (54) is provided, at least in its sliding-surface region (56), in a sliding member (42) which lies closer to the at least one circumferential end (38) of the at least one damper-element arrangement (16) than in the case of a sliding member (50) which lies closer to the centre of the circumference (60) of the at least one damper-element arrangement (16).

6. Vibration-damping device according to Claim 5, **characterized in that** the solid lubricant is polytetrafluoroethylene.

7. Vibration-damping device according to one of Claims 1 to 6, **characterized in that** the supporting region (54) has a lower coefficient of friction with regard to the at least one damper-element arrangement (16) in its region which is provided substantially for frictional interaction with the region of the at least one damper-element arrangement (16) which is closer to at least one circumferential end (38) than in its region which is provided substantially for frictional interaction with the region of the at least one damper-element arrangement (16) which is closer to the centre of the circumference (60).

## Revendications

1. Dispositif d'amortissement de vibration comprenant :
- un côté primaire (14),
- un côté secondaire (18) rotatif par rapport au côté primaire (14) autour d'un axe de rotation (A) contre l'action d'au moins un système d'éléments amortisseurs (16), l'au moins un système d'éléments amortisseurs (16) pouvant être sollicité sur ou à proximité de ses extrémités périphériques (38) par le côté primaire (14) ou par le côté secondaire (18) pour la transmission de l'effort,
- une zone d'appui (54), sur le côté primaire (14) et/ou sur le côté secondaire (18) pour l'appui dans le sens radial vers l'extérieur de l'au moins un système d'éléments amortisseurs (16),
- un frottement agissant entre l'au moins un système d'éléments amortisseurs (16) et la zone d'appui (54), dans une zone du système d'éléments amortisseurs (16) plus proche d'un milieu de la périphérie (60),
**caractérisé en ce que**
- le frottement agit également entre l'au moins un système d'éléments amortisseurs (16) et la zone d'appui (54), dans une zone du système d'éléments amortisseurs (16) plus proche au moins d'une extrémité périphérique (38), et
- le système d'éléments amortisseurs (16) présente, dans sa zone plus proche de l'au moins une extrémité périphérique (38), un coefficient de frottement par rapport à la zone d'appui (54) inférieur à celui de la zone plus proche du milieu de la périphérie (60).

2. Dispositif d'amortissement de vibration selon la revendication 1,
**caractérisé en ce que**
l'au moins un système d'éléments amortisseurs (16) possède au moins un élément amortisseur réalisé, de préférence revêtu, dans sa zone plus proche de l'extrémité périphérique (38), avec un matériau présentant un coefficient de frottement par rapport à la zone d'appui (54) inférieur à celui d'un matériau avec lequel l'au moins un élément amortisseur est réalisé, de préférence revêtu, dans sa zone plus proche du milieu de la périphérie (60).

3. Dispositif d'amortissement de vibration selon la revendication 1,
**caractérisé en ce que**
l'au moins un système d'éléments amortisseurs (16) comprend une pluralité d'éléments amortisseurs (36) disposés de manière consécutive dans la direction de la périphérie, **en ce que** les éléments amortisseurs (36) sont en appui ou peuvent être en appui, dans leurs zones d'extrémité (48), sur la zone d'appui (54) par le biais d'organes de glissement (42, 50), et **en ce qu'**un organe de glissement (42; 50') plus proche de l'au moins une extrémité périphérique (38) de l'au moins un système d'éléments amortisseurs (16) présente un coefficient de frottement par rapport à la zone d'appui (54) inférieur à celui d'un organe de glissement (50; 50'') plus proche du milieu de la périphérie de l'au moins un système d'éléments amortisseurs (16).

4. Dispositif d'amortissement de vibration selon la revendication 3,
**caractérisé en ce que**
un organe de glissement (42) plus proche de l'au moins une extrémité périphérique (38) de l'au moins un système d'éléments amortisseurs (16) est muni d'une matière synthétique renforcée de fibres de carbone ou de fibres aramides au moins dans la zone de sa surface de glissement (56) et **en ce qu'**un organe de glissement (50) plus proche du milieu de la périphérie (60) de l'au moins un système d'éléments amortisseurs est muni d'une matière synthétique renforcée de fibres de verre au moins dans la zone de sa surface de glissement (52).

5. Dispositif d'amortissement de vibration selon la revendication 3 ou 4,
**caractérisé en ce que**
un organe de glissement (42) plus proche de l'au moins une extrémité périphérique (38) de l'au moins un du système d'éléments amortisseurs (16) présente au moins dans la zone de sa surface de glissement (56) une proportion de lubrifiant solide supérieure à celle d'un organe de glissement (50) plus proche du milieu de la périphérie (60) de l'au moins un système d'éléments amortisseurs (16) et/ou **en ce qu'**un lubrifiant solide est prévu au moins dans la zone de la surface de glissement (56) d'un organe de glissement (42) plus proche de l'au moins une extrémité périphérique (38) de l'au moins un système d'éléments amortisseurs (16) avec un coefficient de frottement par rapport à la zone d'appui (54) inférieur à celui de l'organe de glissement (50) plus proche du milieu de la périphérie (60) de l'au moins un système d'éléments amortisseurs (16).

6. Dispositif d'amortissement de vibration selon la revendication 5,
**caractérisé en ce que**
le lubrifiant solide est du polytétrafluor-éthylène.

7. Dispositif d'amortissement de vibration selon l'une des revendications 1 à 6,
**caractérisé en ce que**
la zone d'appui (54) présente, dans sa zone prévue essentiellement pour l'interaction de frottement avec la zone plus proche de l'au moins une extrémité périphérique (38) de l'au moins un système d'éléments amortisseurs (16), un coefficient de frottement par rapport à l'au moins un système d'éléments amortisseurs (16) inférieur à celui de la zone prévue essentiellement pour l'interaction de frottement avec la zone plus proche du milieu de la périphérie (60) de l'au moins un système d'éléments amortisseurs (16).
